# EUROPÄISCHE PATENTSCHRIFT

(11) **EP 3 623 400 B1**
(45) Veröffentlichungstag und Bekanntmachung des Hinweises auf die Patenterteilung: **18.11.2020**
(21) Anmeldenummer: 19197333.8
(22) Anmeldetag: 13.09.2019
(51) Int. Cl.: C08G 18/38, C08J 9/30, C08G 18/08, C08G 18/44, C08G 18/66, C08G 18/70, C08L 75/06, C09J 7/20, B32B 27/40, C08G 101/00

(54) **ELASTISCHER FLAMMGESCHÜTZTER POLYURETHANSCHAUM, KLEBEBAND MIT EINEM TRÄGER DARAUS SOWIE HERSTELLUNGSVERFAHREN DAFÜR**
ELASTIC FLAME-RETARDED POLYURETHANE FOAM, ADHESIVE TAPE WITH A CARRIER MADE OF SAME AND METHOD FOR PRODUCING THE SAME
MOUSSE DE POLYURÉTHANE IGNIFUGE ÉLASTIQUE, BANDE ADHÉSIVE DOTÉE D'UN SUPPORT DE MOUSSE DE POLYURÉTHANE IGNIFUGE ÉLASTIQUE AINSI QUE PROCÉDÉ DE FABRICATION CORRESPONDANT

(30) Priorität: 14.09.2018 DE 102018215651
(43) Veröffentlichungstag der Anmeldung: 18.03.2020
(73) Patentinhaber: tesa SE, 22848 Norderstedt (DE)
(72) Erfinder: BELARDI, Jacob, 22337 Hamburg (DE); EROL, Ediz, 22307 Hamburg (DE); HOMANN, Vanessa, 22527 Hamburg (DE)

(56) Entgegenhaltungen:
- EP-A1- 2 860 028
- WO-A1-03/042272
- WO-A1-2007/068596
- US-A1- 2010 152 374

## Beschreibung

Die vorliegende Erfindung betrifft einen Polyurethanschaum, erhältlich durch mechanisches Schäumen eines Ausgangsgemisches aus einer Polyurethan-Dispersion, wobei das Polyurethan aus mindestens einer Polyisocyanatkomponente und mindestens einer Polyolkomponente zusammengesetzt, d.h. hergestellt ist, und mindestens eines Tensids. Die Erfindung betrifft ferner ein Klebeband mit einem solchen Polyurethanschaum als Träger, die Verwendung des Polyurethanschaums sowie des Klebebandes und ein Verfahren zur Herstellung des Polyurethanschaums.

Klebstoffe und Klebebänder werden im Allgemeinen verwendet, um zwei Substrate zusammenzufügen, so dass eine dauerhafte oder permanente Verbindung entsteht. Trotz einer Vielzahl an Klebstoffen und Klebebändern ist aufgrund von neuartigen Substraten sowie steigenden Anforderungen bei der Endanwendung die Notwendigkeit gegeben, neue Haftklebemassen (d.h. Selbstklebemassen), Formulierungen und Klebebanddesigns zu entwickeln. Als eine wichtige Eigenschaft hat sich der Flammschutz herausgestellt.

So gibt es vielfältige Anwendungen und Konstruktionen, in denen für verwendete Materialien vom Gesetzgeber hohe Anforderungen an die Schwerentflammbarkeit gestellt werden. Klebstoffe und Klebebänder, die schwer entflammbar sind, werden daher vor allem in Konstruktionen eingesetzt, die derartigen erhöhten Sicherheitsanforderungen unterliegen. Diese finden sich u.a. im Transportsektor, beispielsweise in Flugzeugen, Zügen, Bussen sowie anderen Fahrzeugen und auch Aufzügen. Auch in - insbesondere öffentlich zugänglichen - Gebäuden ist es häufig erforderlich, dort verwendete Klebebänder so auszustatten, dass sie schwer oder gar nicht entflammbar sind. Ein weiteres Beispiel ist die Computertechnologie, in der infolge einer fortschreitenden Miniaturisierung von Bauteilen immer mehr Haftklebebänder eingesetzt werden, andererseits aber auch die Anforderungen an diese immer höher werden. In den Schaltkreisen können schon im Betrieb sehr hohe Temperaturen auftreten. Werden auf den Schaltkreisen auch Lötverbindungen hergestellt, treten dabei Temperaturen von 280 °C und mehr auf, bei denen sich vorhandene Klebebänder nicht entzünden dürfen.

Die Begriffe "Flammschutz" und "Schwerentflammbarkeit" umfassen daneben häufig auch indirekte Aspekte wie eine verringerte Rauch- und Hitzeentwicklung sowie eine Verhinderung oder zumindest Minderung der Bildung schädlicher Gase.

Neben flammgeschützten Klebemassen müssen auch die Träger solcher Klebebänder flammgeschützte Eigenschaften aufweisen. Gerade für die genannten Anwendungsbereiche gibt es jedoch weitere Anforderungen an die Klebebänder bzw. deren Träger. So werden insbesondere geschäumte Träger benötigt.

Nun sind zwar flammgeschützte Schäume bekannt. So werden Polyurethan-Dispersionen als weitere Komponente Flammschutzmittel zugegeben und gemeinsam mit der Dispersion geschäumt. Problematisch bei solchen Schäumen ist, dass bei diesen Migration der als Additiv hinzugefügten Flammschutzmittel auftritt, d.h. die Additive innerhalb einer Schicht oder in eine benachbarte Schichte migrieren und daher eine gleichmäßige Flammschutzwirkung über den gesamten Schaum nicht gewährleisten werden kann.

Um dieses Problem der Migration zu beseitigen schlägt die WO 03/042272 A1 vor, Copolymere mit Flammschutzwirkung in die Polyurethane "einzubauen". Die flammschützende Wirkung geht damit von Bausteinen des Polyurethans aus, so dass keine Migration erfolgt. Als Flammschutzkomponenten kommen dabei insbesondere Halogen- oder Phosphor-haltige Komponenten zum Einsatz.

Auch die US 2010/0152374 A1 beschreibt Polyurethane mit Copolymeren mit Flammschutzwirkung zum Einsatz in Beschichtungen, Klebmassen oder Dichtungen. Hier werden Polyphosphatester mit einer Diisocyanatkomponente sowie einer Polyolkomponente umgesetzt.

Bei den in den beiden Offenlegungsschriften genannten Schäumen handelt es sich um Hartschäume.

Im Bereich der speziellen Klebeanwendungen sind jedoch nicht alle Polyurethane/ Polyurethanschäume geeignet. So besteht für viele Anwendungen insbesondere das Bedürfnis nach elastischen Polyurethanschäumen. Die vorstehend genannten Polyurethane sind daher nicht geeignet.

Die EP 2 860 028 A1 beschreibt Polyurethanschäume, die insbesondere als Dichtung oder Klebeband geeignet sind mit Dicken nicht größer als 0,2 mm. Diese Schäume werden durch sogenanntes "Frothing", d.h. mechanisches Aufschlagen bzw. Schäumen von Polyurethan-Dispersionen erhalten. Diese Schäume weisen jedoch keine flammschützenden Eigenschaften auf.

Eine besondere Herausforderung im Hinblick auf Flammschutzeigenschaften bei Klebebändern mit Trägern besteht darin, dass selbst wenn Träger wie auch Klebemasse(n) jeweils für sich gute Flammschutzeigenschaften aufweisen, dies nicht für die Kombination aus Träger und Klebemasse gelten muss. Es ist stets zu prüfen, inwieweit die Kombination aus Klebmasse und Träger den Flammschutzanforderungen gerecht wird.

Aufgabe der Erfindung ist es daher, einen Polyurethanschaum zur Verfügung zu stellen, der gute Flammschutzeigenschaften aufweist, insbesondere keine Migration des Flammschutzmittels zeigt, und als Träger für Klebebänder geeignet ist.

Gelöst wird diese Aufgabe durch einen Polyurethanschaum, wie er im Hauptanspruch beschrieben ist. Gegenstand der Unteransprüche sind vorteilhafte Fortbildungen des Erfindungsgegenstandes. Des Weiteren umfasst die Erfindung ein Klebeband mit dem Polyurethanschaum als Träger, die Verwendung des Polyurethanschaums sowie des Klebebands sowie ein Verfahren zur Herstellung des Polyurethanschaums.

Demgemäß betrifft die Erfindung einen Polyurethanschaum der eingangs genannten Art, bei dem die Polyolkomponente oder mindestens eine der Polyolkomponenten mindestens ein Comonomer mit Flammschutzwirkung enthaltend zwei Hydroxygruppen aufweist.

Als Polyolkomponente im Sinne der Erfindung sind dabei nicht nur Polymere mit mindestens zwei Hydroxygruppen gemeint, sondern allgemein Verbindungen mit mindestens zwei gegenüber Isocyanaten aktiven Wasserstoffatomen.

Überraschenderweise hat sich im Rahmen der Erfindung herausgestellt, dass man durch mechanisches Schäumen, auch als "Frothing" oder "Schlagschäumen" bezeichnet, von erfindungsgemäßen Mischungen aus zumindest Polyurethan-Dispersion und Tensid elastische Schäume erhält, die gute Flammschutzeigenschaften aufweisen und daher auch als Träger für flammgeschützte Klebebänder, insbesondere solche mit Acrylatklebemassen, geeignet sind. Von einer erfindungsgemäßen Mischung ist auch eine Polyurethan-Dispersion umfasst, die bereits von Vornherein ausreichende Mengen an Tensid enthält, so dass vor dem Frothing keine weitere Zugabe von Tensid erforderlich ist.

Mit Polyurethan-Dispersion sind dabei sowohl fertige Polyurethan-Dispersionen gemeint wie auch Polyurethan-Präpolymere, die während des Schlagschäumens zum Polyurethan in Schaumform reagieren.

Als Polyurethan-Dispersionen im Sinne der vorliegenden Erfindung können die folgenden Dispersionen, optional in Kombination, zum Einsatz kommen:
a) Anionisch stabilisierte aliphatische Polyesterpolyurethan-Dispersionen (Dispersionen auf Basis von Polyester und aliphatischem anionischem Isocyanat-Polyurethan). Hierzu gehören die folgenden Produkte, die von der Covestro AG vertrieben werden: Impranil® LP RSC 1380, DL 1537 XP, DL 1554 XP.
b) Anionisch stabilisierte aliphatische Polyether-Polyurethane-Dispersionen. Zu diesen zählen die folgenden Produkte, die von der Covestro AG vertrieben werden: Impranil® LP DSB 1069.
c) Anionisch stabilisierte aliphatische Polycarbonat-Polyester-Polyurethan-Dispersionen. Zu diesen zählen die folgenden Produkte, die von der Covestro AG vertrieben werden: Impranil® DLU.
d) Anionisch stabilisierte Polycarbonat-Polyurethan-Dispersionen. Zu diesen zählen die folgenden Produkte, die von der Covestro AG vertrieben werden: Impranil® DL 2288 XP.

Hierbei handelt es sich um Polyurethan-Dispersionen mit einem hohen Feststoffanteil (ungefähr 30 bis 70 Gew.-%, vorzugsweise 50 bis 60 Gew.-%). Alle vorstehend unter a) bis d) genannten Produkte sind frei von organischen Co-Lösungsmitteln, Verdickern und externen Tensiden.

Die Polyurethan-Dispersionen der vorliegenden Erfindung sind wässrig. Vorzugsweise sind sie frei von organischen Lösungsmitteln, sie können aber optional organische Lösungsmittel enthalten.

Die mindestens eine Polyisocyanatkomponente ist vorzugsweise ein Diisocyanat. Zum Einsatz kommen können aromatische Diisocyanate wie Toluoldiisocyanat (TDI) (besonders bevorzugt), p-Phenylendiisocyanat (PPDI), 4,4'-Diphenylmethandiisocyanat (MDI), p,p'-Bisphenyldiisocyanat (BPDI), oder insbesondere aliphatische Diisocyanate, wie Isophorondiisocyanat (IPDI), 1,6-Hexamethylenediisocynat (HDI), oder 4,4'-Diisocyanatodicyclohexylmethan (H12MDI). Ebenso kommen Diisocyanate mit Substituenten in Form von Halo-, Nitro-, Cyano-, Alkyl-, Alkoxy-, Haloalkyl-, Hydroxyl-, Carboxy-, Amido-, Amino- oder deren Kombinationen in Frage.

Insgesamt können alle an sich bekannten aliphatischen, cycloaliphatischen, araliphatischen und vorzugsweise die aromatischen mehrwertigen Isocyanate zum Einsatz kommen.

Im Einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-1,4-diisocyanat, 2-Methyl-pentamethylen-1,5-diisocyanat, Tetramethylen-1,4-diisocyanat, und vorzugsweise Hexamethylen-1,6-diisocyanat; cycloaliphatische Diisocyanate wie Cyclohexan-1,3-diisocyanat und Cyclohexan-1,4-diisocyanat und beliebige Gemische dieser Isomeren, 1-Isocyanato-3,3,5-trimethyl-5-isocyanatomethylcyclohexan (Isophorondiisocyanat), 2,4- und 2,6-Hexahydrotoluylendiisocyanat sowie beliebige Gemische dieser Isomeren, 4,4'-, 2,4'- und 2,2'-Dicyclohexylmethandiisocyanat sowie beliebige Gemische dieser Isomeren, und vorzugsweise aromatische Di- und Polyisocyanate, wie beispielsweise 2,4- und 2,6-Toluylen-diisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Vorzugsweise weist die Polyisocyanatkomponente ein zahlenmittleres Molekulargewicht von 60 bis 50.000 g/mol, insbesondere von 400 bis 10.000 g/mol, bevorzugt von 400 bis 6.000 g/mol, auf.

Häufig werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di-und/oder Polyisocyanate. Im Einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht. Beispiele sind mit niedermolekularen Diolen, Triolen, Dialkylenglycolen, Trialkylenglycolen oder Polyoxyalkylenglycolen mit zahlenmittleren Molekulargewichten bis 6.000 g/mol, insbesondere bis 1.500 g/mol, modifiziertes Roh-MDI oder 2,4- bzw. 2,6-Toluylen-diisocyanat. Beispiele für geeignete Di- bzw. Polyoxyalkylenglycole sind Diethylen-, Dipropylen-, Polyoxyethylen-, Polyoxypropylen- und Polyoxypropylenpolyoxyethylenglycole, -triole und/oder -tetrole. Geeignet sind auch NCO-Gruppen enthaltende Prepolymere mit NCO-Gehalten von 25 bis 3,5 Gew. -%, vorzugsweise von 21 bis 14 Gew.-%, bezogen auf das Gesamtgewicht, hergestellt aus Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylendiisocyanat oder Roh- MDI. Bewährt haben sich ferner flüssige, Carbodiimidgruppen und/oder Isocyanuratringe enthaltende Polyisocyanate mit NCO-Gehalten von 33,6 bis 15 Gew.-%, vorzugsweise 31 bis 21 Gew.-%, bezogen auf das Gesamtgewicht, beispielsweise auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie beispielsweise 2,4'-, 4,4'-Diphenylmethan-diisocyanat, Roh-MDI, 2,4- und/oder 2,6-Toluylen-diisocyanat gemischt werden.

Besonders bewährt als Isocyanate haben sich Diphenylmethan-diisocyanat-Isomerengemische oder Roh-MDI und insbesondere Roh-MDI mit einem Diphenylmethan-diisocyanat-Isomerengehalt von 30 bis 55 Gew.-% sowie urethangruppenhaltige Polyisocyanatgemische auf Basis von Diphenylmethan-diisocyanat mit einem NCO-Gehalt von 15 bis 33 Gew.-%.

Bevorzugte Gewichtsanteile der Polyiscocyanatkomponente betragen von 10 bis 40 Gew.-%, insbesondere 13 bis 35 Gew.-% und besonders bevorzugt 15 bis 30 Gew.-%.

Wie vorstehend ausgeführt sind als Polyolkomponente im Sinne der Erfindung nicht nur Polymere mit mindestens zwei Hydroxygruppen gemeint, sondern allgemein Verbindungen mit mindestens zwei gegenüber Isocyanaten aktiven Wasserstoffatomen.

Vorzugsweise ist die Polyolkomponente ein Diol, ein Polyetherdiol, ein Polyesterdiol, ein Polycarbonatdiol, ein Polycaprolactonpolyol oder ein Polyacrylatpolyol, wobei Polyetherdiol, Polyesterdiol und Polycarbonatdiol besonders bevorzugt sind, insbesondere Glycol, Propandiol, Butandiol, Pentandiol, Hexandiol, Cylohexandiol, Cyclohexyldimethanol, Oktandiol, Neopentylglycol, Diethylenglycol, Triethylenglycol, Trimethylpentandiol, Benzoldimethanol, Benzoldiol, Methylbenzoldiol, Bisphenol-A, Poly(butandiol-Co-Adipat)-glycol, Poly(hexandiol-Co-Adipat)-glycol, Poly(ethandiol-Co-Adipat)-glycol, Polytetramethylenglycol, Polypropylenglycol, Polyethylenglycol, oder eine Mischung daraus.

Die Hauptfunktion der Polyolkomponente besteht darin, mit der Polyisocyanatkomponente zu dem Polyurethanpolymer zu reagieren. Zusätzlich dient die Polyolkomponente jedoch auch als physikalischer Konditionierer, da die Elastizität des Polyurethans von dem Molekulargewicht der Polyolkomponente abhängig ist. Allgemein gilt, dass das resultierende Polyurethan umso weicher ist, je höher das Molekulargewicht der Polyolkomponente ist.

Vorzugsweise weist die Polyolkomponente ein zahlenmittleres Molekulargewicht von 60 bis 50.000 g/mol, insbesondere von 400 bis 10.000 g/mol, bevorzugt von 400 bis 6.000 g/mol, auf.

Der mindestens eine Baustein, d.h. Comonomer, mit Flammschutzwirkung kann vorzugsweise ein halogenhaltiger Baustein, insbesondere ausgewählt aus der Gruppe, bestehend aus Derivaten der Tetrabromphthalsäure, modifizierten 2.3-Dibrom-2-buten-1,4-diolen, Tris(2-chlorisopropyl)-phosphat, Tetrabrombisphenol A oder deren Mischungen, sein.

Besonders bevorzugt ist der mindestens eine Baustein, d.h. Comonomer, mit Flammschutzwirkung ein phosphorhaltiger Baustein, insbesondere ausgewählt aus der Gruppe, bestehend aus hydroxy-funktionalisierten Alkylphosphaten, insbesondere hydroxy-funktionalisiertem Tributylphosphat, hydroxy-funktionalisiertem Triphenylphosphat, hydroxy-funktionalisiertem Triethylphosphat, hydroxy-funktionalisierten Arylphosphaten, insbesondere hydroxy-funktionalisiertem Diphenylkresylphosphat, hydroxy-funktionalisierten halogenierten Alkylphosphaten, insbesondere hydroxy-funktionalisiertem Tris(2-chlorisopropyl)-phosphat, oder ein Phosphatester der allgemeinen Formel

HO-(POOR₁-O-R₂-O)ₙ-POOR₁-OH

mit R₁ = Alkyl oder Alkoxy, R₂ = Alkylrest mit C₁ bis C₆ und 2 ≤ n ≤ 300
oder deren Mischungen. Der Phosphatester der vorstehend angegebenen Formel ist aufgrund seiner Umweltverträglichkeit besonders geeignet, da er anders als herkömmliche halogenbasierte Flammschutzmittel auch unter hohen Flammtemperaturen lediglich unter Bildung nicht-toxischer Gase und nur geringer Rauchentwicklung verbrennt.

Bevorzugte Mengen des mindestens einen Bausteins, d.h. Comonomers, mit Flammschutzwirkung betragen von 1 bis 50 Gew.-%, vorzugsweise 5 bis 30 Gew.-% und insbesondere 7 bis 20 Gew.-%.

Zur Einstellung der Eigenschaften des Polyurethanschaums kann es vorteilhaft sein, dass das Ausgangsgemisch des Weiteren mindestens eine weitere Dispersion, typischerweise ausgewählt aus der Gruppe bestehend aus Polyurethan-Dispersionen, deren Polyolkomponente kein Comonomer mit Flammschutzwirkung aufweist, Polyurethan-Dispersionen, deren Polyolkomponente ein Comonomer mit Flammschutzwirkung aufweisen, Synthesekautschuk-Dispersionen, Naturkautschuk-Dispersionen und Polyacrylat-Dispersionen, enthält. Hierüber lassen sich u.a. die Stabilität des Polyurethanschaums und dessen Bruchdehnung einstellen. Polyacrylat-Dispersionen enthalten wasserunlösliches Polyacrylat, das typischerweise mittels eines Emulgators in Wasser dispergiert ist. Sie enthalten beispielsweise etwa 30 bis 60 Gew.-% Polyacrylat und etwa 3 Gew.-% Emulgator. Beim Polyacrylat handelt es sich erfindungsgemäß um ein wasserunlösliches Polyacrylat, Polymethacrylat, Mischungen daraus oder Copolymeren mit anderen Monomeren. Beim Emulgator kann es sich um einen ionischen, nicht-ionischen oder sterischen Emulgator handeln. Dieser ist normalerweise nicht fest in die Polymerketten eingebaut. AcrylatDispersionen können weitere Additive, wie Filmbildner oder Co-Lösemittel, Entschäumer, Flammschutzmittel und/oder Benetzungsmittel enthalten.

Acrylatdispersionen werden typischerweise durch die Emulsionspolymerisation geeigneter Monomere erhalten. Hierzu werden diese mittels eines Emulgators fein in Wasser verteilt. Zur Emulsion der Monomere in Wasser wird ein wasserlöslicher Radikalinitiator gegeben. Da sich die aus diesem gebildeten Radikale bevorzugt im Wasser lösen, ist deren Konzentration in den Monomertröpfchen gering, so dass die Polymerisation dort sehr gleichmäßig ablaufen kann. Nach Beendigung der Polymerisation kann die Dispersion direkt verwendet werden, oft wird sie aber mit Additiven wie Entschäumern, Filmbildnern und/oder Benetzungsmitteln versetzt, um die Eigenschaften noch weiter zu verbessern.

Optional kann die Reaktion der OH-Gruppen der Polyolkomponente mit den Isocyanatgruppen katalysiert werden. Als Katalysator kommen insbesondere in Betracht:
Organische Metallverbindungen, vorzugsweise organische Zinnverbindungen, wie Zinn(II)salze von organischen Carbonsäuren, beispielsweise Zinn(II)acetat, Zinn(II)octoat, Zinn(II)ethylhexanoat, Zinn(II)laurat und die Dialkylzinn(IV)salze von organischen Carbonsäuren, beispielsweise Dibutylzinndiacetat, Dibutylzinndilaurat, Dibutylzinnmaleat, Dioctylzinndiacetat sowie tertiäre Amine wie Triethylamin, Tributylamin, Dimethylcyclohexylamin, Di-methylbenzylamin, N-Methyl-imidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethylhexylen-1,6-diamin, Pentamethyldiethylentriamin, Tetramethyldiaminoethylether, Bis-(dimethylaminopropyl)harnstoff, Dimethylpiperazin, 1,2-Dimethylimidazol, 1-Aza-bicyclo-[3.3.0]-octan, 1,4-Diaza-bicyclo-[2.2.2]-octan, außerdem Alkanolaminverbindungen wie Triethanolamin, Tris-isopropanolamin, N-Methyl- und N-Ethyldiethanolamin und Dimethylethanolamin.

Als Katalysatoren kommen weiter in Betracht : Tris- (dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-formiat, N,N,N-Trimethyl-N-(2-hydroxypropyl)-2-ethylhexanoat, Tetraalkylammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Vorzugsweise werden tertiäre Amine, Zinn- und Bismutverbindungen, Alkali- und Erdalkalicarboxylate, quarternäre Ammoniumsalze, s-Hexahydrotriazine und Tris-(dialkylaminomethyl)phenole eingesetzt.

Es werden vorzugsweise 0,001 bis 5 Gew. -%, insbesondere 0,002 bis 2 Gew.-% Katalysator bzw. Katalysatorkombination, bezogen auf das Gesamtgewicht des Ausgangsgemisches, verwendet.

Das Polyurethan kann optional eine aktiven Wasserstoff enthaltende Komponente umfassen, die eine hydrophile Gruppe bilden kann, und zwar vorzugsweise von 1 bis 15 Gew.-%, insbesondere von 3 bis 10 Gew.-% und besonders bevorzugt von 4 bis 7 Gew.-%. "Aktiver Wasserstoff" bedeutet dabei, dass das Wasserstoffatom der Komponente in der Weise instabil ist, dass es leicht mit anderen Verbindungen eine chemische Reaktion, z.B. eine Substitutionsreaktion, eingehen kann, so dass sich eine hydrophile Gruppe bilden kann. Diese Komponente bewirkt, dass das Polyurethan effizient in Wasser dispergiert werden kann. Als hydrophile Gruppe kommen insbesondere in Frage: -COO⁻, -SO₃⁻, -NR₃⁺, oder -(CH₂CH₂O)ₙ-. Die eine aktiven Wasserstoff enthaltende Komponente kann beispielsweise sein: Dimethylolpropionsäure (DMPA), Dimethylolbuttersäure (DMBA), Poly(ethylenoxid)glycol, Bis(hydroxylethyl)amine, oder Natrium-3-bis(hydroxyethyl)aminopropansulfonat.

Die eine aktiven Wasserstoff enthaltende Komponente ist, wie vorstehend beschrieben, optional. Zum Zwecke der Dispergierung enthält die Polyurethan-Dispersion alternativ oder zusätzlich häufig mindestens ein Tensid.

Als besonders geeignete Tenside, die auch als Schaumstabilisator wirken, seien insbesondere Stokal® STA (Ammoniumstearat) und Stokal® SR (Succinamat) der Bozzetto Group genannt.

Es kommen jedoch auch weitere Tenside in Betracht, die insbesondere ausgewählt sein können aus der Gruppe, bestehend aus Ethersulfaten, Fettalkoholsulfaten, Sarcosinaten, organischen Aminoxiden, Sulfonaten, Betainen, Amiden organischer Säuren, Sulfosuccinaten, Sulfonsäuren, Alkanolamiden, ethoxylierten Fettalkoholen, Sorbinaten und deren Kombinationen.

Als weitere optionale Komponente kann das Ausgangsgemisch ein Verdickungsmittel enthalten. Hier kann z.B. Borchigel® ALA verwendet werden. Weiterhin sind als Verdickungsmittel Polyetherurethanlösungen wie beispielsweise Ortegol PV301 der Evonik Industries geeignet. Ein Verdickungsmittel stellt sicher, dass der Polyurethanschaum auch beim Trocknen stabil bleibt.

Ebenfalls optional kann das Ausgangsgemisch einen Vernetzer enthalten. Als solche kommen insbesondere Melamin-basierte wie Melamin, Isocyanat-basierte oder Polyaziridin-basierte Vernetzer in Frage. Besonders geeignet sind auch geblockte aliphatische Polyisocanate auf Wasserbasis, die bei erhöhten Temperaturen unter Freisetzung der Isocyanatgruppen entblockt werden. Die Isocyanatgruppen reagieren nach dem Abkühlen mit Luftfeuchtigkeit. Dabei entstehen Aminogruppen, die dann mit den Isocyanatgruppen zu Harnstoffgruppen reagieren (d.h. Reaktion mit sich selbst). Denkbar ist allgemein auch, dass entblockte Isocyanate mit OH-Gruppen des Polyurethans (zu weiteren Urethangruppen) reagieren. Ein Beispiel für einen solchen Vernetzer ist Imprafix 2794 der Covestro AG. Ein weiterer möglicher Vernetzer ist Cymel® 325.

Das Ausgangsgemisch kann weitere Additive wie Stabilisatoren oder Lichtschutzmittel enthalten. Auch Lösungsmittel können als weitere Additive zugesetzt werden, wobei der Anteil des Lösungsmittels bis zu 50 Gew. -%, bezogen auf die gesamte Menge des fertigen Ausgangsgemisches, betragen kann. Geeignet sind zur Herstellung von Polyurethanwerkstoffen gebräuchliche Lösungsmittel wie niedrig siedende Kohlenwasserstoffe mit Siedepunkten unter 100 °C, vorzugsweise unter 50 °C, aber auch andere Lösungsmittel wie beispielsweise Paraffine, halogenierte Kohlenwasserstoffe, halogenierte Paraffine, Ether, Ketone, Carbonsäurealkylester, Alkylcarbonate oder zusätzliche flüssige Flammschutzmittel wie Alkylphosphate wie beispielsweise Triethylphosphat oder Tributylphosphat, halogenierte Alkylphosphate wie beispielsweise Tris-(2-chlorpropyl)phosphat oder Tris-(1,3-dichlorpropyl)phosphat, Arylphosphate wie beispielsweise Diphenylkresylphosphat, Phosphonate wie beispielsweise Diethylethanphosphonat. Einsetzbar sind ebenfalls Gemische aus den genannten Lösungsmitteln und/oder zusätzlichen Flammschutzmitteln.
Weitere optionale Additive sind Zellregler der an sich bekannten Art wie Paraffine oder Fettalkohole oder Di-methylpolysiloxane, Flammschutzmittel, Pigmente oder Farbstoffe, Stabilisatoren gegen Alterungs- und Witterungseinflüsse, Weichmacher, fungistatisch und bakteriostatisch wirkende Substanzen, Füllstoffe wie Bariumsulfat, Bentonit, Kaolin, Glaspulver, Glaskugeln, Glasfasern, Calciumcarbonat, Kieselgur, Quarzsand, Fluorpolymere, Thermoplasten, Mikrokugeln, expandierbarer Graphit, Russ oder Schlämmkreide oder Kombinationen davon.

Die vorliegende Erfindung umfasst auch ein Verfahren zur Herstellung des erfindungsgemäßen Polyurethanschaums mit den folgenden Schritten:
a) Vorlegen der Komponenten, nämlich einer Polyurethan-Dispersion, wobei das Polyurethan aus mindestens einer Polyisocyanatkomponente, mindestens einer mindestens ein Comonomer mit Flammschutzwirkung enthaltend zwei Hydroxygruppen enthaltenden Polyolkomponente und ggf. weiteren Polyolkomponenten zusammengesetzt ist, und mindestens eines Tensids sowie optional weiterer Komponenten, nämlich
   i) weitere Dispersionen, enthaltend Polyurethan oder Polyacrylat, unter Bildung eines Ausgangsgemisches;
b) mechanisches Schäumen des Ausgangsgemisches unter Bildung einer feuchten Polyurethanschaummasse, optional unter Zugabe weiterer Komponenten, nämlich
   ii) Vernetzer,
   iii) Füllstoffe und/oder
   iv) weitere Additive;
c) Auftragen der feuchten Polyurethanschaummasse auf eine Oberfläche;
d) Trocken der feuchten Polyurethanschaummasse unter Erhalt des Polyurethanschaums.

Die Herstellung der Polyurethan-Dispersion kann dabei auf die nachfolgend beschriebene Weise erfolgen:
Das mindestens eine Comonomer mit Flammschutzwirkung und die mindestens eine Polyolkomponente sowie optional die aktiven Wasserstoff enthaltende Komponente sowie Lösungsmittel (z.B. Aceton oder N-Methylpyrrolidon) werden in einen Behälter unter Stickstoffatmosphäre gegeben und - beispielsweise mit einem Flügelrührer - gerührt. Wenn die Komponenten gut durchmischt sind, wird die mindestens eine Polyisocyanatkomponente zugegeben und der Behälter für vier bis sechs Stunden auf ungefähr 40 bis 90°C erhitzt und anschließend abgekühlt.

Wenn der Behälter auf 30° C bis 50° C abgekühlt ist, wird eine basische Lösung wie z.B. Triethylamin unter Rühren zugegeben und das Gemisch für fünfzehn bis zwanzig Minuten neutralisiert. Die Mischung wird dann in Wasser gegeben, optional kann an dieser Stelle ein Kettenverlängerer zugesetzt werden. Man erhält die erfindungsgemäße Polyurethan-Dispersion mit Flammschutzwirkung.

Zur Bildung des Polyurethanschaums wird die Ausgangsmischung, also die wie vorstehend oder auf andere Weise hergestellte Polyurethan-Dispersion zusammen mit dem mindestens einen Tensid, sowie optional einem Lösungsmittel, einem Vernetzer und/oder den weiteren optionalen Bestandteilen mechanisch aufgeschlagen und geschäumt. Optional kann nach dem Aufschlagen ein Verdickungsmittel zugegeben werden.

Alternativ wird nicht zunächst eine Polyurethan-Dispersion hergestellt. Stattdessen kommt eine Präpolymer-Dispersion zum Einsatz, und das Präpolymer polymerisiert beim mechanischen Aufschlagen/Schäumen zum Polyurethan.

Es ist möglich, aber nicht notwendig, zusätzlich ein physikalisches Treibmittel zuzugeben. So kann die Ausgangsmischung beispielsweise in Anwesenheit eines Gases wie Luft, Stickstoff oder eines Edelgases wie zum Beispiele Helium, Neon, oder Argon geschäumt werden.

Treibmittel können einzeln oder als Mischung verschiedener Treibmittel zum Einsatz kommen. Treibmittel können aus einer großen Anzahl Materialien ausgewählt werden, die folgendes umfasst: Kohlenwasserstoffe, Ether und Esters und Ähnliches. Typische physikalische Treibmittel weisen einen Siedepunkt im Bereich von -50° C bis +100°C, und vorzugsweise von -50°C bis +50°C auf. Bevorzugte physikalische Treibmittel umfassen die FCKWs (Fluorchlorkohlenwasserstoffe) wie 1,1-Dichloro-1-fluoroethan, 1,1-Dichloro-2,2,2-trifluoroethan, Monochlorodifluoromethan, und 1-Chloro-1,1-difluoroethan; die FCWs (Fluorokohlenwasserstoffe) wie 1,1,1,3,3,3-Hexafluoropropan, 2,2,4,4-Tetrafluorobutan, 1,1,1,3,3,3-Hexafluoro-2-methylpropan, 1,1,1,3,3-Pentafluoropropan, 1,1,1,2,2-Pentafluoropropan, 1,1,1,2,3-Pentafluoropropan, 1,1,2,3,3-Pentafluoropropan, 1,1,2,2,3-Pentafluoropropan, 1,1,1,3,3,4-Hexafluorobutan, 1,1,1,3,3-Pentafluorobutan, 1,1,1,4,4,4-Hexafluorobutan, 1,1,1,4,4-Pentafluorobutan, 1,1,2,2,3,3-Hexafluoropropan, 1,1,1,2,3,3-Hexafluoropropan, 1,1-Difluoroethan, 1,1,1,2-Tetrafluoroethan, und Pentafluoroethan; Fluoroether wie Methyl-1,1,1-trifluoroethylether und Difluoromethyl-1,1,1-trifluoroethylether; Kohlenwasserstoffe wie n-Pentan, Isopentan, und Cyclopentan; Methylenchlorid; oder beliebige Kombinationen der vorstehend genannten Verbindungen. Solche Treibmittel können bevorzugt in Mengen von 5 Gew.-% bis 50 Gew.-% des Reaktionsgemisches, insbesondere von 10 Gew.-% bis 30 Gew.-% des Reaktionsgemisches eingesetzt werden.

Der so erhaltene Schaum weist vorzugsweise eine Dichte von 250 kg/m³ bis 500 kg/m³, vorzugsweise 350 bis 450 kg/m³ auf.

Durch das Schäumen und abhängig von den verwendeten Komponenten weist der Schaum eine bestimmte Viskosität auf. Diese liegt vorzugsweise bei höchstens 18 Pa·s, insbesondere höchstens 15 Pa·s, bevorzugt höchstens 12 Pa·s, insbesondere höchstens 9 Pa·s, besonders bevorzugt höchstens 8 Pa·s, insbesondere höchstens 7 Pa·s, ganz besonders bevorzugt höchstens 6 Pa·s, insbesondere höchstens 5 Pa·s. Weiterhin weist der Schaum vorzugsweise eine Viskosität von mindestens 0,8 Pa·s, insbesondere mindestens 0,9 Pa·s, bevorzugt mindestens 1 Pa·s, insbesondere mindestens 1,5 Pa·s, besonders bevorzugt mindestens 2 Pa·s, insbesondere mindestens 2,5 Pa·s, ganz besonders bevorzugt mindestens 3 Pa·s, insbesondere mindestens 3,5 Pa·s, oder mindestens 4 Pa·s, auf.

Der erhaltene Schaum kann vorzugsweise weiterverarbeitet und getrocknet werden. Dabei wird der Schaum in Form einer Schaumschicht auf einen Träger aufgebracht. Auf dem Träger wird der Schaum getrocknet. Dies kann beispielsweise in einem Trockenofen erfolgen. Der Schaum kann beispielsweise auf dem Träger durch den Trockenofen gefahren werden.

Der Träger kann ein Releaseliner, ein permanenter Liner, oder ein temporärer Träger mit einer nicht-haftenden Oberfläche sein. Der Träger kann insbesondere mit einem Antihaftmittel wie einer Silikonbeschichtung beschichtet sein oder ein nicht-haftendes Material umfassen wie beispielsweise ein Fluorpolymer, z.B. Teflon®.

Optional kann über die Schaumschicht eine Folie aufgebracht werden. Die Folie kann, wenn sie gespannt ist, die Dicke der Schaumschicht begrenzen. Die Folie kann aber auch nur als Abdeckung fungieren.

In einer weiteren bevorzugten Ausführungsform kann der Schaum mittels einer Klinge oder eines Messers auf den Träger aufgebracht werden, wodurch eine gleichmäßige Dicke der Schaumschicht erreicht wird, bevor diese in den Trockenofen gebracht bzw. gefahren wird. Alternativ können auch Walzen vorgesehen sein, um die Dicke der Schaumschicht einzustellen.

Nach Aufbringen der Schaumschicht auf den Träger und optionaler Abdeckung mit einer Folie erfolgt die Trocknung, vorzugsweise in einem Trockenofen, was das Vernetzen fördert. Bevorzugte Temperaturen zum Trocknen betragen von 50°C bis 180°C, vorzugsweise von 50 °C bis 120 °C, insbesondere von 70°C bis 115°C, ganz besonders bevorzugt von 100°C bis 115°C. Vorzugsweise beträgt die Temperatur mindestens 50°C, insbesondere mindestens 60°C, bevorzugt mindestens 70°C, insbesondere mindestens 80°C, ganz besonders bevorzugt mindestens 90°C, insbesondere mindestens 100°C, insbesondere mindestens 110°C, sehr bevorzugt mindestens 120°C, insbesondere mindestens 130°C. Weiterhin beträgt die Temperatur vorzugsweise höchstens 180°C, insbesondere höchstens 170°C, besonders bevorzugt höchstens 160°C, insbesondere höchstens 150°C.

Vorzugsweise erfolgt das Trocknen in Schritt d) der oben angegebenen Verfahrensfolge in mindestens zwei Stufen, wobei die Temperatur der Trocknung von einem Schritt zum nächsten erhöht wird. Anders als bei Verwendung von hohen Ausgangstemperaturen (z.B. 120°C) beim Trocknen ermöglicht eine gestufte Erhöhung der Trocknungstemperatur ein gleichmäßiges Trocknen, was zu einer gleichmäßigen Verteilung der Zellgrößen führt. Bei geringerer Temperatur erfolgt zunächst eine relativ gleichmäßige Vortrocknung des gesamten Schaums und im weiteren Schritt bei höherer Temperatur die Entfernung der Restfeuchte.

Es kann jedoch auch wünschenswert sein, eine über den Querschnitt variierende Zellgröße zu erreichen. In diesem Fall sollte gleich mit einer hohen Trocknungstemperatur gearbeitet werden. Das sorgt dafür, dass der Schaum an der Oberfläche schnell trocknet, im Inneren hingegen lange Zeit feucht bleibt, wodurch sich die über den Querschnitt unterschiedliche Zellgrößenverteilung ergibt.

Besonders bevorzugt erfolgt das Trocknen in Schritt d) in zwei Stufen, wobei die Temperatur der Trocknung im 1. Schritt von 50°C bis 100°C, vorzugsweise 70°C bis 90°C, insbesondere 80°C, und die Temperatur der Trocknung im 2. Schritt von 105°C bis 180°C, vorzugsweise 110°C bis 150°C, insbesondere 120°C, beträgt.

Das entstehende Polyurethanschaumsubstrat kann zwecks Lagerung aufgerollt werden und in beliebiger Größe zugeschnitten und abgegeben werden.

Bevorzugte Dicken des Polyurethanschaumsubstrats betragen mindestens 0,1 mm, insbesondere mindestens 0,2 mm. Weiterhin betragen die Dicken des Polyurethanschaumsubstrats bevorzugt höchstens 0,5 mm, insbesondere höchstens 0,4 mm, vorzugsweise höchstens 0,3 mm.

Nach dem Trocknen und eventuellem Vernetzen kann die optionale Folie entfernt werden und der Träger kann von dem Polyurethanschaumsubstrat entfernt werden. Es kann aufgerollt werden. Alternativ können Folie und/oder Träger beispielsweise als Releaseliner auf dem Polyurethanschaumsubstrat verbleiben.

Weiterhin alternativ bevorzugt kann ein Liner bereits auf dem Träger aufgebracht werden, auf den dann der Polyurethanschaum aufgebracht wird, der im Anschluss direkt auf dem Liner getrocknet wird. Nach dem Trocknen und eventuellem Vernetzen wird der Liner vom Träger entfernt und zusammen mit dem Polyurethanschaumsubstrat aufgerollt. Optional kann eine Releasebeschichtung wie z.B. eine Silikonbeschichtung zwischen Träger und Liner oder zwischen Liner und Schaum aufgebracht sein. Der Liner kann ein permanenter oder ein Releaseliner sein.

In noch einer weiteren bevorzugten Ausführungsform wird der Schaum auf einen Träger aufgebracht. Eine Folie wird über den Schaum gedeckt, wenn er in den Ofen gelangt. Nach dem Trocknen oder zumindest teilweise Aushärten bildet die Folie einen Liner und wird mit dem Polyurethanschaumsubstrat aufgerollt. Optional kann ein weiterer Liner über dem Träger aufgebracht werden. Der Liner kann ebenfalls auf dem Produkt verbleiben und mit aufgerollt werden. Liner können somit auf die Schaumschicht als Releaseschicht von der Trägerschicht, als Folie per se, als von der Folie entfernter Releaseliner oder in beliebiger Kombination der vorstehend genannten Möglichkeiten aufgebracht werden.

Bevorzugte mögliche Materialien für den Releaseliner umfassen Papier, Polymerfolien oder beliebige Kombinationen. Das Papier kann ein- oder insbesondere beidseitig mit einer abhäsiven Beschichtungsmasse (auch als dehäsive oder anti-adhäsive Masse bezeichnet) ausgerüstet werden, um die Adhäsionsneigung von adhärierenden Produkten gegenüber diesen Oberflächen zu verringern (trennwirksame Funktion). Beispiele für Polymere der Polymerfolien sind Polyolefine, Polyester, Polyamide, Polyvinylchloride, Fluoropolymere, Polyimide, oder beliebige Kombinationen. Beispiele für Polyolefine umfassen Polyethylene, Polypropylene oder beliebige Kombinationen. Beispiele für Polyester umfassen Poly(ethylenterephthalate) (PET). In weiteren Beispielen besteht die Polymerfolie aus aromatischen Polyestern oder Polyesteramiden. Besonders geeignet ist Polyethylenterephthalat (PET). Weitere bevorzugte Folienmaterialien sind Low Density Polyethylen (LDPE), High Density Polyethylene (HDPE), Polypropylen oder beliebige Kombinationen.

Als abhäsive Beschichtungsmassen, die auch Releasebeschichtung genannt werden, können eine Vielzahl verschiedener Stoffe eingesetzt werden: Wachse, fluorierte oder teilfluorierte Verbindungen, Carbamat-Lacke und insbesondere Silikone sowie verschiedene Copolymere mit Silikon-Anteilen. In den letzten Jahren haben sich Silikone als Releasematerialien im Bereich der Klebeband-Anwendung auf Grund ihrer guten Prozessierbarkeit, niedrigen Kosten und des breiten Eigenschaftsprofils weitgehend durchgesetzt. Zudem können als Liner strukturierte Liner oder Liner mit Füllstoffen oder anderen partikulären Stoffen oder Partikeln in oder an der Oberfläche, oder Liner bestehend aus oder beschichtet mit sonstigen geeigneten trennenden Schichten oder Beschichtungen eingesetzt werden.

Das resultierende Schaumschicht-Liner-Produkt kann von der Rolle abgegeben und in gewünschte Größen und Formen zugeschnitten werden.

Besonders bevorzugt weist der Polyurethanschaum eine Bruchdehnung (gemessen in Anlehnung an DIN EN ISO 527-3) von mindestens 100%, insbesondere mindestens 200%, vorzugsweise mindestens 300%, insbesondere mindestens 400%, besonders bevorzugt mindestens 500%, insbesondere mindestens 700%, weiterhin bevorzugt von mindestens 800%, ganz besonders bevorzugt von mindestens 1.000% auf. Besonders bevorzugt weist das Polyurethanschaumsubstrat, d.h. der Polyurethanschaumträger, ein Rückstellvermögen von über 50 % auf, noch bevorzugter von über 70 % und insbesondere über 80 %. Das heißt, dass vorzugsweise der elastische Anteil des Substrats größer ist als der plastische Anteil.

Besonders bevorzugt weist der Polyurethanschaum bei einer Belastung in Dickenrichtung im vierten Zyklus durchgehend eine Stauchhärte von 10 bis 1000 kPa, bevorzugt 50 bis 500 kPa, insbesondere bevorzugt 100 bis 400 KPa im Bereich zwischen 40% und 60%, besonders bevorzugt im Bereich zwischen 30 und 70%, und insbesondere bevorzugt im Bereich zwischen 20 und 80% auf. Dabei stellt sich der Polyurethanschaum nach Wegfall der Belastung innerhalb von 5 Minuten auf mindestens 70%, bevorzugt mindestens auf 80%, insbesondere bevorzugt auf mindestens 90%, seiner ursprünglichen Dicke zurück. Innerhalb von 12 Stunden nach Belastung erreicht der Schaum wieder 90%, bevorzugt 95%, insbesondere bevorzugt 100% seiner ursprünglichen Dicke.

Der Polyurethanschaum weist Zellen auf. Diese Zellen können geschlossen, halboffen oder offen sein. Mindestens 50% der Zellen können einen Zelldurchmesser von mindestens ungefähr 30 µm, insbesondere mindestens 40 µm, bevorzugt mindestens 50 µm, besonders bevorzugt mindestens 60 µm, insbesondere mindestens 70 µm, ganz besonders bevorzugt mindestens 80 µm, insbesondere mindestens 90 µm, besonders geeigneter Weise mindestens 100 µm, insbesondere mindestens 120 µm, vorzugsweise nicht größer als ungefähr 160 µm aufweisen. In anderen bevorzugten Ausführungsformen weisen mindestens 50% der Zellen einen Zelldurchmesser von nicht mehr als ungefähr 160 µm, insbesondere nicht mehr als 140 µm, vorzugsweise nicht mehr als 120 µm, insbesondere nicht mehr als 100 µm, besonders bevorzugt nicht mehr als 90 µm, insbesondere nicht mehr als 80 µm, besonders geeigneter Weise nicht mehr als 70 µm, insbesondere nicht mehr als 60 µm auf.

Das erfindungsgemäße flammgeschützte Polyurethanschaumsubstrat ist insbesondere als Träger für flammgeschützte Klebebänder geeignet. Die vorliegende Erfindung betrifft daher des Weiteren ein Klebeband umfassend mindestens einen Träger aus einem erfindungsgemäßen Polyurethanschaum sowie mindestens eine Schicht einer flammgeschützten Klebmasse.

Die Klebemasse ist vorzugsweise eine Haftklebemasse und basiert weiter vorzugsweise auf einem Acrylat(co)polymer, Silikon(co)polymer, Naturkautschuk, Nitrilkautschuk, d.h. Acrylnitril-Butadien-Kautschuk, oder (ggf. chemisch oder physikalisch vernetztem) Synthesekautschuk wie Vinylaromatenblockcopolymer oder einer Mischung davon. Besonders bevorzugt ist eine Acrylathaftklebemasse. Die (Haft)Klebemasse kann insbesondere zur Einstellung einer geeigneten Adhäsion bzw. eines geeigneten Tacks zudem Klebharz enthalten. Zusammensetzung und Herstellung von Haftklebemassen bzw. Haftklebemasseschichten gehören zum gängigen Wissen des Durchschnittsfachmanns. Ferner sei hierzu auf das "Handbook of Pressure Sensitive Adhesive Technology", Third Edition, Edited by Donatas Satas, Satas & Associates, Warwick, Rhode Island, 1999, verwiesen.

Häufig enthält die Haftklebemasse zudem Klebharz zur Einstellung der Adhäsion. Zudem kann die Haftklebemasse mittels UV, Elektronenstrahlen oder sonstigen Strahlen oder thermisch vernetzt sein. Geeignete Prozesse auf Basis von UV-Polymerisation sind außerdem beschrieben in DE69214438 T2 oder US7491434 B2.

Eine Acrylathaftklebemasse, also eine Haftklebemasse auf Basis von Poly(meth)acrylaten, ist dabei für die Klebebänder besonders bevorzugt.

Unter "Poly(meth)acrylaten" werden - dem allgemeinen Verständnis entsprechend - Polymere verstanden, die durch radikalische Polymerisation von Acryl- und/oder Methylacrylmonomeren sowie gegebenenfalls weiteren copolymerisierbaren Monomeren zugänglich sind. Der Begriff "Poly(meth)acrylat" umfasst erfindungsgemäß sowohl Polymere auf Basis von Acrylsäure und deren Derivaten als auch solche auf Basis von Acrylsäure und Methacrylsäure und deren Derivaten als auch solche auf Basis von Methacrylsäure und deren Derivaten, wobei die Polymere immer Acrylsäureester, Methacrylsäureester oder Mischungen aus Acryl- und Methacrylsäureestern enthalten.

Das Polyacrylat ist bevorzugt durch eine freie oder kontrollierte radikalische Polymerisation einer oder mehrerer (Meth)Acrylsäuren oder (Meth)Acrylsäureester erhältlich und wird besonders bevorzugt thermisch vernetzt, um - gerade im Falle dicker Klebmasseschichten - einen Vernetzungsgradienten zu verhindern, welcher zwangsläufig aus einem photochemischen Vernetzungsverfahren oder einer Elektronenstrahlvernetzung resultiert.

In einer bevorzugten Variante werden für die Haftklebemasse thermisch-vernetzbare Polymere auf Poly(meth)acrylatbasis eingesetzt. Die Masse umfasst vorteilhaft ein Polymer, bestehend aus
(a1) 70 bis 100 Gew.-% Acrylsäureester und/oder Methacrylsäureester und/oder deren freien Säuren folgender Strukturformel 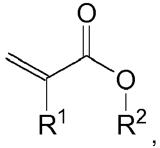 wobei R¹ H oder CH₃ darstellt und R² H oder Alkylketten mit 1 bis 14 C-Atomen darstellt;
(a2) 0 bis 30 Gew.-% olefinisch ungesättigte Monomere mit funktionellen Gruppen und
(a3) optional weitere Acrylate und/oder Methacrylate und/oder olefinisch ungesättigte Monomere (vorzugsweise mit einem Anteil zwischen 0 bis 5 Gew.-%), die mit der Komponente (a1) copolymerisierbar sind und eine funktionelle Gruppe aufweisen, die mittels des Kupplungsreagenzes zu einer kovalenten Vernetzung führt.
Die Gewichtsangaben beziehen sich auf das Polymer.

Vorzugsweise werden für die Monomere (a1) Acrylmomonere, umfassend Acryl- und Methacrylsäureester mit Alkylgruppen, bestehend aus 1 bis 14 C-Atomen, eingesetzt. Spezifische Beispiele, ohne sich durch diese Aufzählung einschränken zu wollen, sind Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigte Isomere wie zum Beispiel 2-Ethylhexylacrylat.

Weitere einzusetzende Verbindungsklassen, die ebenfalls in geringen Mengen unter (a1) hinzugesetzt werden können, sind Cyclohexylmethacrylate, Isobornylacrylat und Isobornylmethacrylate.

Deren Anteil beträgt vorzugsweise maximal bis zu 20 Gew.-%, weiter vorzugsweise maximal bis zu 15 Gew.-%, jeweils bezogen auf die Gesamtmenge an Monomeren (a1).

Vorzugsweise werden für (a2) Monomere verwendet wie beispielsweise Maleinsäureanhydrid, Itaconsäureanhydrid, Glycidylmethacrylat, Benzylacrylat, Benzylmethacrylat, Phenylacrylat, Phenylmethacrylat, tert-Butylphenylacrylat, tert-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, wobei diese Aufzählung nicht abschließend ist.

Ebenso bevorzugt werden für die Komponente (a2) aromatische Vinylverbindungen eingesetzt, wobei die aromatischen Kerne bevorzugt aus C₄- bis C₁₈-Bausteinen bestehen und auch Heteroatome enthalten können. Besonders bevorzugte Beispiele sind Styrol, 4-Vinylpyridin, N-Vinylphthalimid, Methylstyrol und 3,4-Dimethoxystyrol, wobei diese Aufzählung nicht abschließend ist.

Besonders bevorzugte Beispiele für die Komponente (a3) sind Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, N-tert-Butylacrylamid, N-Methylolmethacrylamid, N-(Butoxymethyl)methacrylamid, N-Methylolacrylamid, N-(Ethoxymethyl)acrylamid, N-Isopropylacrylamid, Vinylessigsäure, β-Acryloyloxypropionsäure, Trichloracrylsäure, Fumarsäure, Crotonsäure, Aconitsäure, Dimethylacrylsäure, 4-Vinylbenzoesäure, wobei diese Aufzählung nicht abschließend ist.

Monomere der Komponente (a3) können vorteilhaft auch derart gewählt werden, dass sie funktionelle Gruppen enthalten, die eine nachfolgende strahlenchemische Vernetzung (beispielsweise durch Elektronenstrahlen oder UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid, Allylacrylat, wobei diese Aufzählung nicht abschließend ist.

Zur Polymerisation werden die Monomere dermaßen gewählt, dass die resultierenden Polymere als thermisch vernetzbare Polyacrylatmassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York, 1989) besitzen.

Bevorzugte Flammschutzmittel in der (Haft)Klebemasse sind: (i) N-haltige Flammschutzmittel, insbesondere ausgewählt aus der Gruppe, bestehend aus Melamin, Triazin, Isocyanurat, Cyanursäure, Harnstoff und Guanidin; (ii) N/P-haltige Flammschutzmittel, insbesondere ausgewählt aus der Gruppe, bestehend aus Hexaphenoxycyclotriphosphazen, (iii) P-haltige Flammschutzmittel, insbesondere ausgewählt aus der Gruppe, bestehend aus Phosphinen, Phosphinoxiden, Phosphoniumverbindungeen, Phosphonaten, elementarem roten Phosphor und Phosphiten, Phosphate wie Ammoniumpolyphosphat, Phosphinsäuresalz und/oder Diphosphinsäuresalz wie z.B. ein Metallphosphinatsalz wie Aluminumphosphinatsalz oder Zinkphosphinatsalz; (iv) halogenhaltige Flammschutzmittel, (v) Aluminiumtrihydrat oder Magnesiumhydroxid. Vorzugsweise ist der Anteil an Flammschutzmittel insgesamt 10 bis 100 phr, bevorzugt 20 bis 50 phr, und insbesondere 30 bis 35 phr, bezogen auf das Basispolymer. Besonders bevorzugt sind N/P-haltige Flammschutzmittel. Ebenso beträgt der Anteil an Flammschutzmittel insgesamt vorzugsweise 1 bis 40 Gew.-%, bevorzugt 10 bis 35 Gew.-% und insbesondere 20 bis 30 Gew.-%, bezogen auf die Haftklebemasse.

Die Klebmasse kann weitere Füllstoffe und/oder Additive enthalten. Weitere optionale Additive sind Pigmente oder Farbstoffe, Stabilisatoren gegen Alterungs- und Witterungseinflüsse, Weichmacher, fungistatisch und bakteriostatisch wirkende Substanzen, Füllstoffe wie Bariumsulfat, Bentonit, Kaolin, Glaspulver, Glaskugeln, Glasfasern, Calciumcarbonat, Kieselgur, Quarzsand, Fluorpolymere, Thermoplasten, Mikrokugeln, expandierbarer Graphit, Russ oder Schlämmkreide oder Kombinationen davon.

Der Polyurethanschaum sowie das Klebeband der vorliegenden Erfindung sind sowohl für doppelseitige Klebebänder und Stanzteile, die verwendet werden, um zwei Teile miteinander zu verbinden, wie auch für einseitige Klebebänder und Stanzteile geeignet. Der allgemeine Ausdruck "Klebeband" (Haftklebeband) umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen.
Ein Klebeband weist eine Längsausdehnung (x-Richtung) und eine Breitenausdehnung (y-Richtung) auf. Das Klebeband weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Klebebandes möglichst gleich, vorzugsweise exakt gleich. Im Rahmen der vorliegenden Erfindung haben die Erfinder erkannt, dass durch Frothing (Schlagschäumen) flammgeschützter Polyurethan-Dispersionen flammgeschützte Polyurethanschäume erhalten werden, die als Träger oder sogenannte "Backings" für Klebebänder eingesetzt werden können. Da die Polyurethan-Dispersionen intrinsisch flammgeschützt sind, d.h. das Polymer ein Comonomer mit Flammschutzwirkung aufweist, das in das Polymer eingebaut ist, beruht die Flammschutzwirkung nicht auf zugesetzten Additiven, die möglicherweise in eine andere Schicht oder innerhalb der Schicht migrieren könnten. Die Probleme, die mit der Migration verbunden sind, insbesondere eine nicht gleichmäßige oder nicht ausreichende Flammschutzwirkung, können durch die vorliegende Erfindung somit sicher vermieden werden.

Die Polyurethan-Dispersionen der vorliegenden Erfindung sind gut schäumbar und liefern elastische Schäume mit Flammschutzwirkung. In Verbindung mit flammgeschützten Acrylat-Haftklebemassen erhält man sehr gute Haftklebebänder mit Flammschutzwirkung. Versuche haben gezeigt, dass auch, wenn ein Träger gute Flammschutzwirkung aufweist, dies nicht für die Kombination von Träger und einer Acrylat-Haftklebemasse gelten muss. Im Falle der erfindungsgemäßen Haftklebebänder hat sich jedoch gezeigt, dass auch die Kombination aus flammgeschütztem Träger mit der Acrylat-Haftklebemasse mit Flammschutzwirkung, also das Haftklebeband eine gute Flammschutzwirkung aufweist.

Anders als die flammgeschützten Schäume des Standes der Technik, die für den Einsatz als Träger für Klebebänder aufgrund ihrer Härte und Dicke nicht geeignet sind, liefert das erfindungsgemäße Verfahren durch mechanisches Schlagschäumen (Frothing) elastische Schäume mit Flammschutzwirkung, die als Träger für flammgeschützte Klebebänder sehr gut geeignet sind.

Die erfindungsgemäßen Klebebänder sind daher besonders geeignet zur Verwendung bei der Verklebung von Komponenten in Konstruktionen, die erhöhten Sicherheitsanforderungen in Bezug auf die Schwerentflammbarkeit bzw. den Flammschutz unterliegen. So sind sie besonders geeignet für den Einsatz im Transportsektor, beispielsweise in Flugzeugen, Zügen, Bussen und auch Aufzügen sowie in Kraftfahrzeugen allgemein. Weiterhin sind die erfindungsgemäßen Klebebänder insbesondere für den Einsatz in der Computertechnologie geeignet, in der infolge einer fortschreitenden Miniaturisierung von Bauteilen immer mehr Haftklebebänder eingesetzt werden, andererseits aber auch die Anforderungen an diese immer höher werden. In den Schaltkreisen können schon im Betrieb, aber auch bei der Herstellung sehr hohe Temperaturen auftreten, denen die erfindungsgemäßen Klebebänder gewachsen sind.

### Experimenteller Teil

Die folgenden beispielhaften Experimente sollen die Erfindung näher erläutern, ohne durch die Wahl der angegebenen Beispiele die Erfindung unnötig einschränken zu wollen.

### Prüfmethoden

Die folgenden Prüfmethoden wurden zur Bestimmung der Parameter in den Beispielen sowie den in der Beschreibung angegebenen bevorzugten Parametern herangezogen:
Alle Messungen wurden, sofern nichts anderes angegeben ist, bei 23 °C und 50 % rel. Luftfeuchtigkeit durchgeführt.

### Dicke

Die Dicke einer Klebemasseschicht, eines Klebebands bzw. einer Schaumschicht, einer Trägerschicht oder eines Liners lässt sich über handelsübliche Dickenmessgeräte (Taster-Prüfgeräte) mit Genauigkeiten von weniger als 1 µm Abweichung ermitteln. In der vorliegenden Anmeldung wird das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen. Die Dicke einer Klebemasseschicht kann insbesondere durch Bestimmung der Dicke eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Dicke eines Abschnitts gleicher Dimensionen des verwendeten Trägers bzw. Liners.

### Masseauftrag (Flächengewicht)

Der Masseauftrag (Flächengewicht) einer Probe wie zum Beispiel einer Klebemasse oder eines Schaums auf einen Untergrund wie zum Beispiel einen Liner bezieht sich wenn nicht anders angegeben auf das Gewicht pro Fläche nach dem Trocknen. Der Masseauftrag kann durch Bestimmung der Masse eines bezüglich seiner Länge und seiner Breite definierten Abschnitts einer solchen auf einen Untergrund aufgetragenen Probe bestimmt werden, abzüglich der (bekannten oder separat ermittelbaren) Masse eines Abschnitts gleicher Dimensionen des verwendeten Untergrunds.

### Dichte

Die Dichte eines Schaumträgers wird ermittelt durch Quotientenbildung aus Masseauftrag und Dicke des auf einen Untergrund wie zum Beispiel einen Liner aufgetragenen Schaums.

### Feststoffgehalt

Der Feststoffgehalt ist ein Maß für den Anteil an nicht verdampfbaren Bestandteilen in einer Probe wie zum Beispiel einer Dispersion. Er wird gravimetrisch bestimmt, indem man die Probe einwiegt, dann für 2 Stunden bei 120 °C im Trockenschrank die verdampfbaren Anteile abdampft und den Rückstand zurückwiegt.

### Viskosität

Dynamische Viskositätsmessung: Die Viskositätsmessung wird mit einem Rheometer des Typs ARES (Rheometric Scientific) bei Raumtemperatur (20 °C) und bei einer Schergeschwindigkeit von 100 s⁻¹ mit einem Kegel-Platte-System mit einem Durchmesser von 50 mm durchgeführt.

### Bruchdehnung (Bruchspannung)

Die Bruchdehnung (Bruchspannung) eines Trägers werden in Anlehnung an DIN EN ISO 527-3 unter Verwendung eines Probestreifens des Trägers, Probekörper Typ 2, mit einer Breite von 20 mm bei einer Separationsgeschwindigkeit von 100 mm pro Minute gemessen. Der Anfangsabstand der Einspannklemmen beträgt 100 mm.

### Rückstellvermögen beziehungsweise Elastizität

Zur Messung des Rückstellvermögens wurde um 100 % gedehnt, in dieser Dehnung für 30 s gehalten und dann entspannt. Nach einer Wartezeit von 1 min wurde erneut die Länge gemessen.
Das Rückstellvermögen berechnet sich wie folgt: RV = ((L₁₀₀ - L_{end})/L₀)·100
mit RV = Rückstellvermögen in %
L₁₀₀: Länge nach der Dehnung um 100 %
L₀: Länge vor der Dehnung
L_{end}: Länge nach der Relaxation von 1 min.

Das Rückstellvermögen entspricht dabei der Elastizität.

### Stauchhärte

Aus dem zu prüfenden Material werden Prüfkörper von 30 mm x 30 mm zugeschnitten. Diese werden kantengerade zu einer Höhe von 30 mm aufgestapelt. Der Stapel wird in einer Zug-Dehnungs-Maschine platziert, die mit Platten ausgestattet ist. Mit einer Geschwindigkeit von 10 mm pro Minute werden die Platten aufeinander zubewegt, bis die Vorkraft von 0,2 kPa erreicht ist. Diese Stelle wird als Nullpunkt der Kompression gesetzt. Anschließend wird mit 50 mm pro Minute komprimiert, bis zu einer Kompression von 80%. Dabei wird die notwendige Kraft pro Fläche (Stauchhärte) aufgenommen. Anschließend wird wieder auf 0% Kompression zurückgefahren. Es werden vier Zyklen aufgenommen. Entscheidend für die Beurteilung des Schaums ist der vierte Zyklus.

### Molekulargewicht Mₙ

Die Angaben des zahlenmittleren Molekulargewichts Mₙ in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, 8,0 mm ^{∗} 50 mm (Angaben hier und im Folgenden in der Reihenfolge: Typ, Partikelgrösse, Porosität, Innendurchmesser ^{∗} Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm ^{∗} 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen wie zum Beispiel den Ausgangsstoffen des Polyurethans gegen PMMA-Standards (Polymethylmethacrylat-Kalibrierung) und sonst gegen PS-Standards (Polystyrol-Kalibrierung).

### Brennbarkeit

Die Brennbarkeit wird in Anlehnung an die FAR 25.853 getestet. Der Test wird in einer Testkammer durchgeführt, in der das zu prüfende Probenstück vertikal befestigt wird. Das zu prüfende Probenstück weist eine Größe von 75 mm x 300 mm auf. Die Mitte des unteren Endes des Probenstücks wird für eine Entzündungszeit von 12 Sekunden einer Gasflamme ausgesetzt. Im Folgenden werden Nachbrennzeit, Brennstrecke und Brennzeit der Tropfen gemessen. Nachbrennzeit ist die Zeit, für die die Probe nach der Entzündungszeit nachbrennt. Brennstrecke ist die Strecke an verbranntem Material, die bis zum Ende des Brandes zurückgelegt wird. Brennzeit der Tropfen ist die Zeit, die Tropfen an der Probe, die beim Brennen abfallen, nach dem Abfallen noch brennen.

Der Brennbarkeitstest ist bestanden, wenn die Nachbrennzeit maximal 15 Sekunden, die Brennstrecke maximal 203 mm und die Brennzeit der Tropfen maximal 3 Sekunden beträgt.

### Herstellung und Eigenschaften der Proben

Eingesetzte Rohstoffe:

**Tabelle 1: eingesetzte Rohstoffe**

| | | |
|---|---|---|
| Permutex RU-13-597 | wässrige Dispersion eines phosphorhaltigen Polycarbonat-/Polyester PUs | Stahl Holdings B.V. |
| Hauthane L3808 | wässrige Dispersion eines aliphatischen phosphorhaltigen Polyurethans | Hauthaway & Sons Corporation |
| Permutex RU-4049 | wässrige Dispersion eines aliphatischen Polyether PUs | Stahl Holdings B.V. |
| Impranil DLU | wässrige Dispersion eines aliphatischen Polycarbonat-/Polyester PUs | Covestro AG |
| Impranil DLE | wässrige Dispersion eines aliphatischen Polyether PUs | Covestro AG |
| Ortegol P2 | Schaumstabilisator - wässrige Lösung eines nichtionischen Tensids | Evonik Nutrition & Care GmbH |
| Stokal STA | Schaumstabilisator - wässrige Lösung von Ammoniumstearat | Bozetto Group |
| Stokal SR | Schaumstabilisator - wässrige Dispersion von Succinamat | Bozetto Group |
| Sultflon SAF | Schaumstabilisator - wässrige Lösung eines Natriumsalzes von Fettsäurealkylpolyglycolethersulfate | Bozetto Group |
| Borchi Gel ALA | Verdickungsmittel - wässrige Lösung eines anionisches Polymers | Borchers |
| Ortegol PV301 | Verdickungsmittel - wässrige Lösung eines nichtionisches assoziativen PU-basierten Verdickungsmittel mit annährend newtonischen Verhalten | Evonik Nutrition & Care GmbH |
| Imprafix 2794 XP | Vernetzer - wässrige Lösung eines geblockten aliphatischen Isocyanates | Covestro AG |

Formulierungen der geschäumten Träger:

**Tabelle 2: Zusammensetzungen der (Vergleichs-)Beispiele**

| Komponente | Beispiel 1 | Beispiel 2 | Beispiel 3 | Beispiel 4 | Vergleichsbeispiel 5 |
|---|---|---|---|---|---|
| Permutex RU-13-597 | 100 g | 50 g | 50 g | 50 g | - |
| Permutex RU-4049 | - | 50 g | - | - | - |
| Impranil DLU | - | - | 50 g | - | 100 g |
| Impranil DLE | - | - | - | 50 g | - |
| Ortegol P2 | 6g | 12 g | 12 g | 12 g | 6 g |
| Imprafix 2794XP (optional) | 6 g | 6 g | 6 g | 6 g | 6 g |
| Ortegol PV301 | 2 g | 4 g | 4 g | 4 g | 2 g |
| Wasser | 2 g | 2 g | 2 g | 2 g | 2 g |

**Tabelle 3: Zusammensetzungen der Beispiele**

| Komponente | Beispiel 6 | Beispiel 7 |
|---|---|---|
| Hauthane L-3808 | 100 g | 68 g |
| Permutex RU-13-597 | | |
| Impranil DLU | | 32 g |
| Stokal STA | 2 g | 2 g |
| Stokal SR | 2 g | 2 g |
| Sultaflon SAF | 2 g | 2 g |
| Imprafix 2794 XP (optional) | 6 g | 6 g |

### Herstellung der Schlagschäume:

Die Polyurethan(PU)-Dispersionen (Permutex und/oder Impranil), Schaumstabilisator (Ortegol P2 oder eine Mischung aus Stokal-Typen) werden in einem Becherglas mit einem Flügelrührer gemischt (300s bei 500 RPM). Optional kann zusätzlich ein Vernetzer wie Imprafix 2794 zugegeben werden. Anschließend wird die Mischung bei 2.000 RPM mit einem Flügelrührer aufgeschlagen, bis der Schlagschaum nicht weiter an Volumen zunimmt. Ortegol PV301 oder Borchi Gel ALA wird mit Wasser vorverdünnt und portionsweise unter Rühren bei 500 RPM dem Schlagschaum zugegeben. Anschließend wird für 300 s weiter homogenisiert.

Flammgeschützte Polyurethan-Dispersionen können pur geschäumt werden (Beispiele 1, 6, Beispiel 6 bevorzugt). Zur Erhöhung der Schaumqualität, oder zur Einstellung gewünschter mechanischer Eigenschaften können sie auch mit anderen, nicht flammgeschützten Dispersionen wie Permutex RU-4049, Impranil DLU und Impranil DLE abgemischt werden (Beispiele 2-4, 8, Beispiele 8 bevorzugt) oder anderen flammgeschützten Polyurethan-Dispersionen (Beispiel 7) abgemischt werden. Eine Abmischung mit anderen wässrigen Polymerdispersionen (wie Acrylaten, Naturkautschuk und Synthesekautschuk) ist ebenfalls denkbar. Optional kann ein Vernetzer wie Imprafix 2794 zugegeben werden, um die mechanische und chemische Beständigkeit des Schaums zu erhöhen. Zum Vergleich ist als Beispiel 5 eine nicht flammgeschützte Dispersion (Stand der Technik) angegeben.

### Herstellung der geschäumten Träger:

Der Schlagschaum wird jeweils auf einen silikonisierten Träger aus Polyester ("Silphan S50" des Herstellers Siliconature SPA) aufgestrichen (Nassfilmstärke 500-1000 µm) und je 60 s bei 80°C, 105°C und optional bei 150°C gehärtet. Nach 24h kann der geschäumte Träger vom Liner abgezogen werden.

Eigenschaften der geschäumten Träger:

**Tabelle 4: Eigenschaften des geschäumten Trägers**

| | Beispiel 1 | Beispiel 2 | Beispiel 3 | Beispiel 4 | Vergleichsbeispiel 5 |
|---|---|---|---|---|---|
| Nachbrennzeit | 0 s | 0 s | 0 s | 0 s | 20 s |
| Brennstrecke | 60 mm | 35 mm | 45 mm | 60 mm | 300 mm |
| Brennzeit Tropfen | 0 s | 0 s | 0 s | 0 s | 0 s |
| Dicke | 140 µm | 300 µm | 300 µm | 300 µm | 300 µm |
| Dichte | 370 g/l | 350 g/l | 410 g/l | 460 g/l | 300 g/l |

**Tabelle 5: Eigenschaften des geschäumten Trägers.**

| | Beispiel 6 | Beispiel 7 |
|---|---|---|
| Nachbrennzeit | 0 s | 1 s |
| Brennstrecke | 50 mm | 50 mm |
| Brennzeit Tropfen | 0 s | 1 s |
| Dicke | 532 µm | 671 µm |
| Dichte | 254 g/l | 216 g/l |

Die geschäumten Träger der Beispiele 1 bis 4 und 6 bis 7, dessen Polyurethan u.a. aus Comonomer mit Flammschutzwirkung hergestellt worden ist, bestehen den Brennbarkeitstest, der geschäumte Träger aus Vergleichsbeispiel 5 ohne Flammschutzmittel dagegen nicht.

Die geschäumten Träger der Beispiele 2 und 4 haben zudem eine Bruchdehnung von mindestens 700%. Die geschäumten Träger der Beispiele 6 und 7 lassen sich auf 20% ihrer usprünglichen Dicke komprimieren. Beispiel 7 weist dabei eine Stauchhärte von 80 kPA bei 50% Kompression und 860 kPA bei 80% Kompression im 4. Kompressionszyklus sowie ein Rückstellvermögen von 80% binnen einiger Minuten und 95% innerhalb von 12 Stunden auf. Im Gegensatz dazu weist Beispiel 6 eine Stauchhärte von 3,68 MPa bei 80% Kompression im 4. Zyklus ein Rückstellvermögen von 40% innerhalb weniger Minuten und 57% innerhalb von 12h auf. Eine Stauchhärte bei 50% Kompression im 4. Zyklus kann daher gar nicht angegeben werden.

Die geschäumten Träger aus den Beispielen 2 bis 4 weisen außerdem geringere Zelldurchmesser als der geschäumte Träger aus Beispiel 1 auf.

### Herstellung von flammgeschützten Schaumklebebändern:

Der geschäumte Träger wird jeweils beidseitig mit 50 g/m² flammgeschützter Haftklebemasse laminiert. Die flammgeschützte Haftklebemasse ist eine PolyacrylatHaftklebemasse, die N/P-haltiges Flammschutzmittel enthält.
Eigenschaften der Haftklebebänder mit geschäumtem Träger:

**Tabelle 6: Eigenschaften der Haftklebebänder aus geschäumtem Träger und Polyacrylathaftklebemasse**

| | Beispiel 1 | Beispiel 2 | Beispiel 3 | Beispiel 4 | Vergleichsbeispiel 5 |
|---|---|---|---|---|---|
| Nachbrennzeit | 0 s | 0 s | 0 s | 0 s | 20 s |
| Brennstrecke | 75 mm | 5 mm | 35 mm | 30 mm | 300 mm |
| Brennzeit Tropfen | 0 s | 0 s | 0 s | 0 s | 0 s |

Die Schaumklebebänder der Beispiele 1 bis 4 bestehen den Brennbarkeitstest, das Schaumklebeband aus Vergleichsbeispiel 5 dagegen nicht.

## Patentansprüche

1. Polyurethanschaum, erhältlich durch mechanisches Schäumen eines Ausgangsgemisches aus einer Polyurethan-Dispersion, wobei das Polyurethan aus mindestens einer Polyisocyanatkomponente und mindestens einer Polyolkomponente zusammengesetzt ist, und mindestens eines Tensids,
**dadurch gekennzeichnet, dass** die Polyolkomponente oder mindestens eine der Polyolkomponenten mindestens ein Comonomer mit Flammschutzwirkung enthaltend zwei Hydroxygruppen aufweist.

2. Polyurethanschaum nach Anspruch 1, **dadurch gekennzeichnet, dass** der Polyurethanschaum eine Bruchdehnung, gemessen nach der angegebenen Messmethode, von mindestens 100%, insbesondere mindestens 200%, besonders bevorzugt mindestens 500% und ganz besonders bevorzugt von mindestens 800% aufweist.

3. Polyurethanschaum nach Anspruch 1, **dadurch gekennzeichnet, dass** der Polyurethanschaum bei einer Belastung in Dickenrichtung im vierten Zyklus im Bereich von 20 bis 80% Kompression durchgehend eine Stauchhärte, gemessen nach der angegebenen Messmethode, von 50 bis 500 kPa aufweist, wobei sich der Polyurethanschaum nach Wegfall der Belastung auf mindestens 80%, bevorzugt mindestens 90%, insbesondere 100%, seiner Ursprungsdicke zurückstellt.

4. Polyurethanschaum nach einem der Ansprüche 1 bis 3, **dadurch gekennzeichnet, dass** das Tensid ein nicht-ionisches Tensid, ein ionisches Tensid oder eine Kombination davon ist.

5. Polyurethanschaum nach einem der Ansprüche 1 bis 4, **dadurch gekennzeichnet, dass** das mindestens eine Comonomer mit Flammschutzwirkung ein halogenhaltiges Comonomer, insbesondere ausgewählt aus der Gruppe bestehend aus Derivaten der Tetrabromphthalsäure, modifizierten 2.3-Dibrom-2-buten-1,4-diolen, Tris(2-chlorisopropyl)-phosphat, Tetrabrombisphenol A oder deren Mischungen, ist.

6. Polyurethanschaum nach einem der Ansprüche 1 bis 5, **dadurch gekennzeichnet, dass** das mindestens eine Comonomer mit Flammschutzwirkung ein phosphorhaltiges Comonomer, insbesondere ausgewählt aus der Gruppe bestehend aus hydroxy-funktionalisierten Alkylphosphaten wie insbesondere hydroxy-funktionalisiertem Tributylphosphat, hydroxy-funktionalisiertem Triphenylphosphat, hydroxy-funktionalisiertem Triethylphosphat, hydroxy-funktionalisierten Arylphosphaten wie insbesondere hydroxy-funktionalisierten Diphenylkresylphosphat, hydroxy-funktionalisierten halogenierten Alkylphosphaten wie insbesondere hydroxy-funktionalisiertem Tris(2-chlorisopropyl)-phosphat, oder ein Phosphatester der allgemeinen Formel
HO-(POOR₁-O-R₂-O)ₙ-POOR₁-OH
mit R₁ = Alkyl oder Alkoxy, R₂ = Alkylrest mit C₁ bis C₆ und 2 ≤ n ≤ 300
oder deren Mischungen, ist.

7. Polyurethanschaum nach einem der Ansprüche 1 bis 6, **dadurch gekennzeichnet, dass** die Polyisocyanatkomponente ein Diisocyanat ist.

8. Polyurethanschaum nach einem der Ansprüche 1 bis 7, **dadurch gekennzeichnet, dass** die Polyolkomponente ein Diol, ein Polyetherdiol, ein Polyesterdiol, ein Polycarbonatdiol, ein Polycaprolactonpolyol oder ein Polyacrylatpolyol, insbesondere Glycol, Propandiol, Butandiol, Pentandiol, Hexandiol, Cylohexandiol, Cyclohexyldimethanol, Oktandiol, Neopentylglycol, Diethylenglycol, Triethylenglycol, Trimethylpentandiol, Benzoldimethanol, Benzoldiol, Methylbenzoldiol, Bisphenol-A, Poly(butandiol-Co-Adipat)-glycol, Poly(hexandiol-Co-Adipat)-glycol, Poly(ethandiol-Co-Adipat)-glycol, Polytetramethylenglycol, Polypropylenglycol, Polyethylenglycol oder eine Mischung daraus ist.

9. Polyurethanschaum nach einem der Ansprüche 1 bis 8, **dadurch gekennzeichnet, dass** das Ausgangsgemisch des Weiteren ein Verdickungsmittel enthält.

10. Polyurethanschaum nach einem der Ansprüche 1 bis 9, **dadurch gekennzeichnet, dass** das Ausgangsgemisch des Weiteren einen Vernetzer enthält.

11. Polyurethanschaum nach einem der Ansprüche 1 bis 10, **dadurch gekennzeichnet, dass** das Ausgangsgemisch des Weiteren mindestens eine weitere Dispersion, ausgewählt aus der Gruppe bestehend aus Polyurethan-Dispersionen, deren Polyolkomponente ein Comonomer mit Flammschutzwirkung aufweisen, Polyurethan-Dispersionen, deren Polyolkomponente kein Comonomer mit Flammschutzwirkung aufweisen, Synthesekautschuk-Dispersionen, Naturkautschuk-Dispersionen und Polyacrylat-Dispersionen, enthält.

12. Polyurethanschaum nach einem der Ansprüche 1 bis 11, **dadurch gekennzeichnet, dass** die Polyolkomponente ein zahlenmittleres Molekulargewicht von 60 bis 50.000 g/mol, insbesondere von 400 bis 10.000 g/mol, bevorzugt von 400 bis 6.000 g/mol, aufweist.

13. Klebeband umfassend mindestens einen Träger aus einem Polyurethanschaum nach einem der Ansprüche 1 bis 12 sowie mindestens eine Schicht einer flammgeschützten (Haft-)Klebmasse, wobei das Klebeband vorzugsweise einen Träger aus einem Polyurethanschaum umfasst, auf dem beidseitig eine Schicht einer flammgeschützten (Haft-)Klebmasse angeordnet ist.

14. Klebeband nach Anspruch 13, **dadurch gekennzeichnet, dass** die Klebmasse eine Acrylatklebmasse ist.

15. Verwendung des Polyurethanschaums nach einem der Ansprüche 1 bis 12 als Träger für ein Klebeband, insbesondere ein flammgeschütztes Klebeband.

16. Verwendung des Polyurethanschaums nach einem der Ansprüche 1 bis 12 oder des Klebebands nach einem der Ansprüche 13 oder 14 zur Verklebung von Komponenten in Fortbewegungsmitteln, insbesondere in Fahrzeugen, Flugzeugen oder Zügen, oder in elektronischen Geräten, insbesondere in portablen elektronischen Geräten.

17. Verwendung des Polyurethanschaums nach einem der Ansprüche 1 bis 12 oder des Klebebands nach einem der Ansprüche 13 oder 14 als Zwischenschicht zwischen Batteriezellen, die eine Ausdehnung der Batteriezellen beim Laden/Entladen ausgleicht.

18. Verfahren zur Herstellung eines Polyurethanschaums nach einem der Ansprüche 1 bis 12, umfassend die folgenden Schritte:
a) Vorlegen der Komponenten, nämlich einer Polyurethan-Dispersion, wobei das Polyurethan aus mindestens einer Polyisocyanatkomponente, mindestens einer mindestens ein Comonomer mit Flammschutzwirkung enthaltend zwei Hydroxygruppen enthaltenden Polyolkomponente und gegebenenfalls weiteren Polyolkomponenten zusammengesetzt ist, und mindestens eines Tensids sowie optional weiterer Komponenten, nämlich
i) weitere Dispersionen, enthaltend Polyurethan oder Polyacrylat,
unter Bildung eines Ausgangsgemisches;
b) mechanisches Schäumen des Ausgangsgemisches unter Bildung einer feuchten Polyurethanschaummasse, optional unter Zugabe weiterer Komponenten, nämlich
ii) Vernetzer,
iii) Füllstoffe und/oder
iv) weitere Additive;
c) Auftragen der feuchten Polyurethanschaummasse auf eine Oberfläche;
d) Trocken der feuchten Polyurethanschaummasse unter Erhalt des Polyurethanschaums.

19. Verfahren nach Anspruch 18, **dadurch gekennzeichnet, dass** das Trocknen in Schritt d) in mindestens zwei Stufen erfolgt, wobei die Temperatur der Trocknung von einem Schritt zum nächsten erhöht wird.

20. Verfahren nach Anspruch 19, **dadurch gekennzeichnet, dass** das Trocknen in Schritt d) in zwei Stufen erfolgt, wobei die Temperatur der Trocknung im 1. Schritt von 70°C bis 100°C, insbesondere 80°C, und die Temperatur der Trocknung im 2. Schritt von 105°C bis 140°C, insbesondere 120°C, beträgt.

## Claims

1. Polyurethane foam obtainable by mechanical foaming of a starting mixture comprising a polyurethane dispersion, the polyurethane being composed of at least one polyisocyanate component and at least one polyol component, and at least one surfactant,
**characterized in that** the polyol component or at least one of the polyol components comprises at least one comonomer having flame retardancy effect and containing two hydroxyl groups.

2. Polyurethane foam according to Claim 1, **characterized in that** the polyurethane foam has an elongation at break, measured by the stated measurement method, of at least 100%, more particularly at least 200%, more preferably at least 500% and very preferably of at least 800%.

3. Polyurethane foam according to Claim 1, **characterized in that** the polyurethane foam, on loading in the thickness direction in the fourth cycle in the range from 20% to 80% compression, consistently exhibits a compressive strength, measured by the stated measurement method, of 50 to 500 kPa, wherein the polyurethane foam, after the loading has been discontinued, reverts to at least 80%, preferably at least 90%, more particularly 100% of its original thickness.

4. Polyurethane foam according to any of Claims 1 to 3, **characterized in that** the surfactant is a nonionic surfactant, an ionic surfactant or a combination thereof.

5. Polyurethane foam according to any of Claims 1 to 4, **characterized in that** the at least one comonomer having flame retardancy effect is a halogen-containing comonomer, more particularly selected from the group consisting of derivatives of tetrabromophthalic acid, modified 2,3-dibromo-2-butene-1,4-diols, tris(2-chloroisopropyl) phosphate, tetrabromobisphenol A or mixtures thereof.

6. Polyurethane foam according to any of Claims 1 to 5, **characterized in that** the at least one comonomer having flame retardancy effect is a phosphorus-containing comonomer, more particularly selected from the group consisting of hydroxyl-functionalized alkyl phosphates such as, in particular, hydroxyl-functionalized tributyl phosphate, hydroxyl-functionalized triphenyl phosphate, hydroxyl-functionalized triethyl phosphate, hydroxyl-functionalized arylphosphates such as, in particular, hydroxyl-functionalized diphenyl cresyl phosphate, hydroxyl-functionalized halogenated alkyl phosphates such as, in particular, hydroxyl-functionalized tris(2-chloroisopropyl) phosphate, or a phosphate ester of the general formula
HO-(POOR₁-O-R₂-O)ₙ-POOR₁-OH
where R₁ = alkyl or alkoxy, R₂ = alkyl radical with C₁ to C₆, and 2 ≤ n ≤ 300, or mixtures thereof.

7. Polyurethane foam according to any of Claims 1 to 6, **characterized in that** the polyisocyanate component is a diisocyanate.

8. Polyurethane foam according to any of Claims 1 to 7, **characterized in that** the polyol component is a diol, a polyether diol, a polyester diol, a polycarbonate diol, a polycaprolactone polyol or a polyacrylate polyol, more particularly glycol, propanediol, butanediol, pentanediol, hexanediol, cyclohexanediol, cyclohexyldimethanol, octanediol, neopentyl glycol, diethylene glycol, triethylene glycol, trimethylpentanediol, benzenedimethanol, benzenediol, methylbenzenediol, bisphenol A, poly(butanediol-co-adipate) glycol, poly(hexanediol-co-adipate) glycol, poly(ethanediol-co-adipate) glycol, polytetramethylene glycol, polypropylene glycol, polyethylene glycol or a mixture thereof.

9. Polyurethane foam according to any of Claims 1 to 8, **characterized in that** the starting mixture further comprises a thickener.

10. Polyurethane foam according to any of Claims 1 to 9, **characterized in that** the starting mixture further comprises a crosslinker.

11. Polyurethane foam according to any of Claims 1 to 10, **characterized in that** the starting mixture further comprises at least one further dispersion selected from the group consisting of polyurethane dispersions whose polyol component includes a comonomer having flame retardancy effect, polyurethane dispersions whose polyol component includes no comonomer having flame retardancy effect, synthetic rubber dispersions, natural rubber dispersions and polyacrylate dispersions.

12. Polyurethane foam according to any of Claims 1 to 11, **characterized in that** the polyol component has a number-average molecular weight of 60 to 50 000 g/mol, more particularly of 400 to 10 000 g/mol, preferably of 400 to 6000 g/mol.

13. Adhesive tape comprising at least one carrier comprising a polyurethane foam according to any of Claims 1 to 12 and also at least one layer of a flame-retarded (pressure-sensitive) adhesive composition, the adhesive tape preferably comprising a carrier composed of a polyurethane foam having arranged on both sides a layer of a flame-retarded (pressure-sensitive) adhesive composition.

14. Adhesive tape according to Claim 13, **characterized in that** the adhesive composition is an acrylate adhesive composition.

15. Use of the polyurethane foam according to any of Claims 1 to 12 as carrier for an adhesive tape, more particularly a flame-retarded adhesive tape.

16. Use of the polyurethane foam according to any of Claims 1 to 12 or of the adhesive tape according to either of Claims 13 and 14 for adhesive bonding of components in means of transport, more particularly in vehicles, aircraft or trains, or in electronic devices, more particularly in portable electronic devices.

17. Use of the polyurethane foam according to any of Claims 1 to 12 or of the adhesive tape according to either of Claims 13 and 14 as an intermediate layer between battery cells that compensates any expansion of the battery cells during charge/discharge.

18. Method for producing a polyurethane foam according to any of Claims 1 to 12, comprising the following steps:
a) initially introducing the components, namely a polyurethane dispersion, the polyurethane being composed of at least one polyisocyanate component, at least one polyol component comprising at least one comonomer having flame retardancy effect and containing two hydroxyl groups, and optionally further polyol components, and at least one surfactant, and also, optionally, further components, namely
i) further dispersions comprising polyurethane or polyacrylate,
to form a starting mixture;
b) mechanically foaming the starting mixture to form a wet polyurethane foam composition, optionally with addition of further components, namely
ii) crosslinkers,
iii) fillers and/or
iv) further additives;
c) applying the wet polyurethane foam composition to a surface;
d) drying the wet polyurethane foam composition to give the polyurethane foam.

19. Method according to Claim 18, **characterized in that** the drying in step d) takes place in at least two stages, with the temperature of drying being increased from one step to the next.

20. Method according to Claim 19, **characterized in that** the drying in step d) takes place in two stages, with the temperature of the drying in the 1^{st} step being from 70°C to 100°C, more particularly 80°C, and the temperature of the drying in the 2^{nd} step being from 105°C to 140°C, more particularly 120°C.

## Revendications

1. Mousse de polyuréthane pouvant être obtenue par moussage mécanique d'un mélange de départ composé d'une dispersion de polyuréthane, le polyuréthane étant composé d'au moins un composant de polyisocyanate et d'au moins un composant de polyol, et d'au moins un tensioactif, **caractérisé en ce que** le composant de polyol ou au moins l'un des composants de polyol présente au moins un comonomère doté d'un effet ignifugeant contenant deux groupes hydroxy.

2. Mousse de polyuréthane selon la revendication 1, **caractérisée en ce que** la mousse de polyuréthane présente un allongement à la rupture, mesuré selon la méthode de mesure indiquée, d'au moins 100 %, en particulier d'au moins 200 %, particulièrement préférablement d'au moins 500 % et tout particulièrement préférablement d'au moins 800 %.

3. Mousse de polyuréthane selon la revendication 1, **caractérisée en ce que** la mousse de polyuréthane présente, dans une contrainte dans la direction d'épaisseur dans le quatrième cycle dans la plage de 20 à 80 % de compression en continu, une résistance à la compression, mesurée selon la méthode de mesure indiquée, de 50 à 500 kPa, la mousse de polyuréthane revenant, après la suppression de la contrainte, à au moins 80 %, préférablement au moins 90 %, en particulier 100 % de son épaisseur d'origine.

4. Mousse de polyuréthane selon l'une quelconque des revendications 1 à 3, **caractérisée en ce que** le tensioactif est un tensioactif non ionique, un tensioactif ionique ou une combinaison correspondante.

5. Mousse de polyuréthane selon l'une quelconque des revendications 1 à 4, **caractérisée en ce que** le comonomère doté d'un effet ignifugeant est un comonomère contenant un halogène, en particulier choisi dans le groupe constitué par des dérivés d'acide tétrabromophtalique, de 2,3-dibromo-2-butène-1,4-diols modifiés, du tris(2-chloroisopropyl)-phosphate, du tétrabromobisphénol A ou de leurs mélanges.

6. Mousse de polyuréthane selon l'une quelconque des revendications 1 à 5, **caractérisée en ce que** l'au moins un comonomère doté d'un effet ignifugeant est un comonomère contenant du phosphore, en particulier choisi dans le groupe constitué par des phosphates d'alkyle fonctionnalisés par hydroxy comme en particulier le phosphate de tributyle fonctionnalisé par hydroxy, le phosphate de triphényle fonctionnalisé par hydroxy, le phosphate de triéthyle fonctionnalisé par hydroxy, des phosphates d'aryle fonctionnalisés par hydroxy comme en particulier le phosphate de diphénylcrésyle fonctionnalisé par hydroxy, des phosphates d'alkyle halogénés fonctionnalisés par hydroxy comme en particulier un tris(2-chloroisopropyl)-phosphate fonctionnalisé par hydroxy, et un ester de phosphate de formule générale
HO-(POOR₁-O-R₂-O)ₙ-POOR₁-OH
avec R₁ = alkyle ou alcoxy, R₂ = radical alkyle en C₁₋₆ et 2 ≤ n ≤ 300 et leurs mélanges.

7. Mousse de polyuréthane selon l'une quelconque des revendications 1 à 6, **caractérisée en ce que** le composant de polyisocyanate est un diisocyanate.

8. Mousse de polyuréthane selon l'une quelconque des revendications 1 à 7, **caractérisée en ce que** le composant de polyol est un diol, un polyétherdiol, un polyesterdiol, un polycarbonatediol, un polycaprolactonepolyol ou un polyacrylatepolyol, en particulier le glycol, un propanediol, un butanediol, un pentanediol, un hexanediol, un cyclohexanediol, un cyclohexyldiméthanol, un octanediol, le néopentylglycol, le diéthylèneglycol, le triéthylèneglycol, un triméthylpentanediol, un benzènediméthanol, un benzènediol, méthylbenzènediol, le bisphénol A, un poly(butanediol-co-adipate)-glycol, un poly(hexanediol-co-adipate)-glycol, un poly(éthanediol-co-adipate)-glycol, un polytétraméthylèneglycol, un polypropylèneglycol, un polyéthylèneglycol ou un mélange correspondant.

9. Mousse de polyuréthane selon l'une quelconque des revendications 1 à 8, **caractérisée en ce que** le mélange de départ contient en outre un épaississant.

10. Mousse de polyuréthane selon l'une quelconque des revendications 1 à 9, **caractérisée en ce que** le mélange de départ contient en outre un agent réticulant.

11. Mousse de polyuréthane selon l'une quelconque des revendications 1 à 10, **caractérisée en ce que** le mélange de départ contient en outre une dispersion supplémentaire, choisie dans le groupe constitué par des dispersions de polyuréthane, dont les composants de polyol présentent un comonomère doté d'un effet ignifugeant, des dispersions de polyuréthane, dont les composants de polyol ne présentent pas un comonomère doté d'un effet ignifugeant, des dispersions de caoutchouc de synthèse, des dispersions de caoutchouc naturel et des dispersions de polyacrylate.

12. Mousse de polyuréthane selon l'une quelconque des revendications 1 à 11, **caractérisée en ce que** le composant de polyol présente un poids moléculaire moyen en nombre de 60 à 50 000 g/mole, en particulier de 400 à 10 000 g/mole, préférablement de 400 à 6 000 g/mole.

13. Ruban adhésif comprenant au moins un support composé d'une mousse de polyuréthane selon l'une quelconque des revendications 1 à 12 ainsi qu'au moins une couche d'une masse (auto)adhésive ignifugée, le ruban adhésif comprenant de préférence un support composé d'une mousse de polyuréthane sur lequel une couche d'une masse (auto)adhésive ignifugée est disposée sur les deux côtés.

14. Ruban adhésif selon la revendication 13, **caractérisé en ce que** la masse adhésive est une masse adhésive d'acrylate.

15. Utilisation de la mousse de polyuréthane selon l'une quelconque des revendications 1 à 12 en tant que support pour un ruban adhésif, en particulier un ruban adhésif ignifugé.

16. Utilisation de la mousse de polyuréthane selon l'une quelconque des revendications 1 à 12 ou du ruban adhésif selon l'une quelconque des revendications 13 et 14 pour le collage de composants dans des moyens de locomotion, en particulier dans des véhicules, des avions ou des trains, ou dans des appareils électroniques, en particulier dans des appareils électroniques portatifs.

17. Utilisation de la mousse de polyuréthane selon l'une quelconque des revendications 1 à 12 ou du ruban adhésif selon l'une quelconque des revendications 13 et 14 en tant que couche intermédiaire entre des cellules de batterie, qui compense une dilatation des cellules de batterie pendant la charge/la décharge.

18. Procédé pour la préparation d'une mousse de polyuréthane selon l'une quelconque des revendications 1 à 12, comprenant les étapes suivantes :
a) mise à disposition des composants, c'est-à-dire d'une dispersion de polyuréthane, le polyuréthane étant composé d'au moins un composant de polyisocyanate, d'au moins un composant de polyol contenant au moins un comonomère doté d'un effet ignifugeant contenant deux groupes hydroxy et éventuellement des composants de polyol supplémentaires, et d'au moins un tensioactif ainsi qu'éventuellement des composants supplémentaires, c'est-à-dire
i) des dispersions supplémentaires, contenant un polyuréthane ou un polyacrylate, avec formation d'un mélange de départ ;
b) moussage mécanique du mélange de départ avec formation d'une masse de mousse de polyuréthane humide, éventuellement avec ajout de composants supplémentaires, c'est-à-dire
ii) des agents réticulants,
iii) des charges et/ou
iv) des additifs supplémentaires ;
c) application de la masse de mousse de polyuréthane humide sur une surface ;
d) séchage de la masse de mousse de polyuréthane humide avec obtention d'une mousse de polyuréthane.

19. Procédé selon la revendication 18, **caractérisé en ce que** le séchage dans l'étape d) est réalisé en au moins deux étapes, la température du séchage étant augmentée d'une étape à la suivante.

20. Procédé selon la revendication 19, **caractérisé en ce que** le séchage dans l'étape d) est réalisé en deux étapes, la température du séchage dans l'étape 1 étant de 70 °C à 100 °C, en particulier 80 °C, et la température du séchage dans l'étape 2 étant de 105 °C à 140 °C, en particulier 120 °C.
